# EUROPEAN PATENT APPLICATION

(11) **EP 1 187 015 A2**
(43) Date of publication of application: **13.03.2002**
(21) Application number: 01301928.6
(22) Date of filing: 02.03.2001
(51) Int. Cl.: G06F 9/455, G06F 9/46

(54) **Internet-enabled embedded device**

(30) Priority: 09.05.2000 US 202924 P; 11.08.2000 US 636552
(71) Applicant: Yipee!, Inc., Rochester, New York 14618 (US)
(72) Inventor: Tosic, Milorad, Edison 08817, New Jersey (US); Djordjevic, Goran, 18000 Nis (YU); Stefanovic, Slavisa, Toronto, Ontario M4K 2H1 (CA)
(74) Representative: Luckhurst, Anthony Henry William

(57) **Abstract**

An embedded device for direct connection to the Internet includes a micro-controller unit, a network interface device, application-specific I/O hardware and an internal bus for connecting them. The micro-controller unit implements a TCP/IP stack in which the various processes are sequentially and preemptively called by a central program loop. The stack processes incoming packets on the fly rather than buffering them; it also sends outgoing packets as they are generated rather than buffering them. When a user interacts with the embedded device over the Internet from a remote host computer, shadowing software runs on the remote host computer to emulate the embedded device, thus offloading processing from the embedded device to the host computer.

## Description

### Reference to Related Application

The present application claims the benefit of U.S. Provisional Application No. 60/202,924, filed May 9, 2000, entitled "Internet-Enabled Embedded Device," the disclosure of which is hereby incorporated by reference in its entirety into the present disclosure.

### Field of the Invention

The present invention is directed to an electronic embedded device capable of being connected to the Internet or a similar network and to a TCP/IP stack and a shadowing method used in implementing such a device.

### Description of Related Art

An embedded device is a specialized device which is part of a larger system or machine. Typically, an embedded device is housed on a single microprocessor board with the programs stored in ROM. Virtually all appliances that have a digital interface ― watches, microwaves, VCRs, cars and the like ― utilize embedded systems. Some embedded systems include an operating system, but many are so specialized that the entire logic can be implemented as a single program.

Many modem electronic embedded devices could benefit from remote control, management, configuration, monitoring and diagnosing. To facilitate the necessary communication, the embedded devices and related computers (such as monitoring stations) are arranged as a computer network. A network, basically, is a collection of interconnected computers that use some consistent protocol to communicate with one another. The communication protocol provides a mechanism by which messages can be decomposed and routed to a destination computer identified by some form of address.

The trend for embedded systems, such as control systems, monitoring systems and office systems, is towards integration by means of interconnection through Internet. The Internet, which can provide the communication medium of the present invention, is a worldwide "network of networks" that links millions of computers through tens of thousands of separate (but intercommunicating) networks. Via the Internet, users can access tremendous amounts of stored information and establish communication linkages to other Internet-based computers and devices.

In order to ensure proper routing of messages over the Internet between the sender and the intended recipient, the messages are first broken up into data packets, each of which receives a destination address according to a consistent protocol, and which are reassembled upon receipt by the target computer. A TCP/IP protocol stack represents a commonly accepted set of protocols for this purpose. TCP/IP stacks are well known in the art; therefore, the operations of known TCP/IP stacks will not be described in detail here. The main protocols in this stack are the Internet Protocol, or IP, which dictates routing information; and the transmission control protocol, or TCP, according to which messages are actually broken up into IP packets for transmission for subsequent collection and reassembly.

While TCP/IP support is found on almost any modern computer, it is almost absent in the world of microcontrollers, embedded computers and intelligent data acquisition systems. Traditional multi-layer TCP/IP implementations require a large amount of memory and computing power. The most compact solutions, available on embedded market today, are programmed in a high-level language and rely heavily on an operating system's services (either general-purpose or real-time) ― a feature that is not supported by standard 8/16-bit microcontrollers without large overheads. Thus, currently only devices with high computing power and storage capacity can directly access the Internet and gain from the connectivity that comes with it.

To date, the best-known method to provide Internet access to simple, inexpensive embedded devices is based on a dedicated gateway computer used to connect embedded device to the Internet or an intranet. Communication between the gateway and the low-performance nodes is done by proprietary low-complexity protocol. However, system-level overheads in terms of cost and power consumption incurred by the additional getaway computer may be substantial, which eventually may rule out the implementation. A TCP/IP stack implementation with sufficiently low resource requirements is unknown in the art.

Another issue of overhead is the issue of storage of data packets. In a standard protocol stack implementation, packet data are stored in a temporal byte array which can than be randomly accessed by protocol software. Also, traditional protocol implementations usually overlay a pointer to a header structure on top of a data array, and then access that header's fields through typecasting and pointer de-referencing. However, the amount of memory needed for storing packet data, as well as processing overhead due to handling complex data structure using pointers, can not be attained by the limited memory and CPU resources presented in the majority of low-complex embedded devices.

Traditionally, networked embedded devices have been integrated into more complex applications by expensive custom-made software. Network connectivity in such systems is usually achieved by a dedicated gateway computer, as is described above. There are two reasons for the high complexity of the application software:
1) Proprietary low-complexity protocols used for communication between embedded devices, and
2) Plain unstructured data coming from/to the embedded device.

As a consequence, the end-user application software must manage knowledge about low-level system details concerning each particular device as well as used communication protocol. Also, the application software must deal with different data formats, extracting information from the row data, and transforming information for further processing.

To overcome these problems, the behavior of an embedded device, or at least that part of the behavior that is of interest for an application, must be structured in a systematic and abstract way such that formal description of the behavior is possible. Interoperability with existing software development paradigms, such as for example software components and object-oriented frameworks, is highly desirable in network presentation of the behavior description.

Currently, these requirements have a prospective to be fully achieved only in high-profile applications running on powerful hardware/software platforms. In the embedded world, the movement towards this direction is evident, particularly for remote management applications, but existing solutions still require powerful embedded processors. To the best of our knowledge, there is no solution that offers abstract representation of device behavior with component and object oriented network presentation of the behavior for small embedded processors with constrained resources, such as 8-bit microcontrollers.

### Summary of the Invention

It will be understood from the above that a need exists in the art to connect embedded devices directly to the Internet or a similar network.

It is therefore a primary object of the invention to provide an embedded device with integrated hardware and software to enable such a connection.

It is another object of the invention to provide a TCP/IP stack implementation with very low resource requirements.

It is still another object of the invention to allow an embedded device to export its functionality to a computer on the network and thereby to offload processing.

It is yet another object of the invention to reduce the overhead for storing packet data by processing data packets on the fly.

To achieve the above and other objects, the present invention is directed to an embedded device having a micro-controller unit, a network interface device and optionally application-specific I/O hardware. The micro-controller unit includes ROM or other memory for storing a TCP/IP stack. The TCP/IP stack is implemented as a central program loop and a plurality of processes which are sequentially and preemptively invoked from the central program loop. Code can also be provided to emulate the embedded device on a user's computer or other host computer on the network, thus offloading processing without the need for a gateway.

By integrating Internet enabling hardware and software with the embedded device, it is possible to eliminate the requirement for dedicating a personal, or specialized gateway computer to the embedded device to act as an embedded device server. Also, it will permit the embedded device to be a responsive, intelligent member of a network. Therefore, the embedded device becomes a true "networked" device, i.e., an Internet Enabled Embedded Device (IEED), and not just a device connected to a network.

For widely dispersed control and supervisory operations, supervisory computers interact with the IEEDs over the Internet, with the IEEDs continuously, and directly connected to the Internet as "nodes". In local, intranet, operations, the flexibility conferred by Internet formalisms can be retained on a restricted, internal network.

In order to simplify distributed application development, by providing a uniform view of heterogeneous network and OS layers, several distributed object computing (DOC) middlewares are proposed. A DOC middleware resides between clients and servers, eliminating many tedious, error-prone, and non-portable aspects of developing and maintaining distributed applications. For example, CORBA allows clients to invoke operations on distributed objects without concern for object location, programming language, OS platform, communication protocol, or hardware. Other common DOC middleware techniques include Microsoft's Component Object Model (COM), Sun Java RMI, and Enterprise Java Beans (EJB).

An IEED exports its functionality to authorized users without regard to the user's Internet location. To achieve location transparency, the IEED must be able to cooperate with existing Internet infrastructure (or with the existing infrastructure of whatever network is used). In addition to TCP/IP as an ultimate entry point to Internet, the IEED presents its functionality in a systematic way that allows other applications to transparently cooperate with the IEED. The DOC middleware is a generally accepted approach to providing interoperability between heterogeneous software/hardware Internet platforms and applications. Enabling the IEED to present itself as a DOC object is the most effective way for integration of sources and users of information.

Internet-enabled embedded devices can provide enhanced functionality to the end-user if they can exploit the full power of the Internet, including the possibility of device integration into standard DOC architectures. However, these architectures are devised for high-performance computing platform, and utilize complex protocols for object location, object activation, remote procedure invocation, parameter marshaling/demarshaling, fault recovery and security. Unfortunately, direct integration of such an architecture into a resource constrained embedded device is not always possible. In order to overcome this obstacle, the present invention implements shadowing, in which a shadow program emulating the IEED, i.e., the IEED's proxy, runs on a host computer. The user interacts with the shadow program as though it were the IEED itself.

The Shadow program is a mobile delegate of a tiny embedded device. An optimized, ultra-small TCP/IP stack provides the IEED with direct Internet connectivity, such that the site on which the Shadow runs can be located anywhere on the Internet.

By using Shadowing, the functionality of the simple embedded device is enabled to become an object (Shadow) on the DOC middleware. The site on which the Shadow runs can be predefined or can be determined on an on-request basis. Also, the time instant of initiating the Shadow can be defined by establishing physical connection between the device and the network or can be deferred until a request has come from a client object.

The present invention provides a method for memory and CPU efficient implementation of network protocol stack software. Also, the invention provides a software architecture for exporting the capabilities (variables, functions, and events) of the IEED in the form of a network object and/or software component. The invention is optimized for simple 8-bit CPU's (general purpose or specialized micro-controllers) having limited memory in conjunction with a network interface device.

The present invention has broad applications in many areas such as factory automation, monitoring systems, data-acquisition systems, office systems, and home appliances.

With the present invention, hardware requirements for the Internet enabled embedded device can be drastically simplified, since a simple 8-bit or 16-bit CPU (general purpose or specialized micro-controller) having the appropriate memory in conjunction with the network interface device is sufficient to provide Internet communication. Thus, an Internet enabled embedded device does not require a conventional CPU, such as a Pentium, PowerPC or Alpha chip. Nor does an Internet enabled embedded device require a conventional OS, such as MS-DOS or Windows 2000. Instead of a conventional general purpose CPU, an inexpensive micro-controller can be utilized for running communication TCP/IP software as well as controlling the network interface device and other application specific I/O hardware.

The TCP/IP stack software is highly optimized in machine language for the highest speed and minimal memory usage, and can be provided as firmware in the micro-controller's ROM, rather than software as is conventional. Accordingly, expensive power and memory hungry general-purpose operating systems (OS) or real-time operating systems (RTOS) are unnecessary since the TCP/IP stack software need not be loaded or managed. However, it should be understood that general-purpose computers will also work with the present invention (with little or no modifications).

Another aspect of the present invention is a method for network presentation of the IEED. The method is based on distributed object computing paradigm and permits the IEED's functionality to be exposed to the network through a Shadow software component. Implemented as an ActiveX component, Java applet, or some other standard form of component software, Shadow enables distributed client applications to invoke operations on the IEED without concern for underlying implementation details or for the physical or network location of the device itself. This feature simplifies the complex task of embedded system integration into distributed Internet environment.

Throughout the specification and claims, it should be understood that a user of a host computer can be a human user or another software application or object. Also, the Shadow can be physically stored in the memory of the IEED or in some computer on the network.

In the first case, when the Shadow is stored in the IEED, it is represented as a software component object. For this purpose, a Java Applet can be used to represent the Shadow. This case is exploited for enabling a Web browser to access the IEED. A Web browser accesses the IEED, as it would any other web site. The IEED sends back a simple web page containing the Shadow Applet. Then, the Shadow is started by the Web browser, enabling the user to access the IEED through the browser.

In the second case, when the Shadow is stored in a computer on the network, it is represented as a software component. For this purpose, an ActiveX control can be used to represent the Shadow. An important aspect of the invention is that once the Shadow is created as an network object within a DOC middleware, it can be accessed by any other object interoperable with this DOC middleware, in both design and run time. Thus, it can be used by a human user who is a software designer working with a software design tool and making a new software application, in which case the Shadow is present in the design time in a form of software component. But, once incorporated on a host computer as an COM software component (for example), the Shadow can be used by any software application interoperable with the COM. The application can use the Shadow in run time to instantiate the Shadow object and to access the IEED through it. A Web browser is just one special case of this scenario.

### Brief Description of the Drawings

A preferred of the present invention will be set forth in detail with reference to the drawings, in which:
Fig. 1 shows a block diagram of an Internet-enabled embedded device according to the preferred embodiment;
Fig. 2 shows an example of a flow-chart and state (FCS) diagram;
Figs. 3A-3C show the operations of an asynchronous event between two processes;
Figs. 4A-4C show the operations of a one-to-one handshake between two processes;
Figs. 5A-5C show the operations of a many-to-one handshake among three processes;
Fig. 6 shows the organization of processes in a TCP/IP module;
Fig. 7 shows a chain of receiver processes and their operations on an incoming packet;
Fig. 8 shows a chain of sender processes and their operations on an outgoing packet;
Fig. 9 shows the results in an error occurring in one of the operations of Fig. 8;
Fig. 10 shows the interaction between an Internet-enabled embedded device such as that of Fig. 1 and a shadow program running on a host computer;
Fig. 11 shows the interaction between a plurality of Internet-enabled embedded devices and a plurality of shadow programs encapsulated within a single software component located on a host computer;
Fig. 12 shows a layered software architecture of the Internet-enabled embedded device and its shadow software;
Fig. 13 shows reference mapping and resolution of Active Interface Objects by using Line references;
Fig. 14 shows the instantiation of Active Interface Objects in the shadow software and their initialization;
Fig. 15 shows the formats of request and receive messages;
Fig. 16 shows various argument type formats used in the request and receive messages of Fig. 15;
Fig. 17 shows the format of an error message; and
Fig. 18 shows the formats of the request and receive messages for two specific types of operations, namely, a get operation and a set operation.

### Detailed Description of the Preferred Embodiment

A preferred embodiment of the present invention will now be described in detail with reference to the drawings.

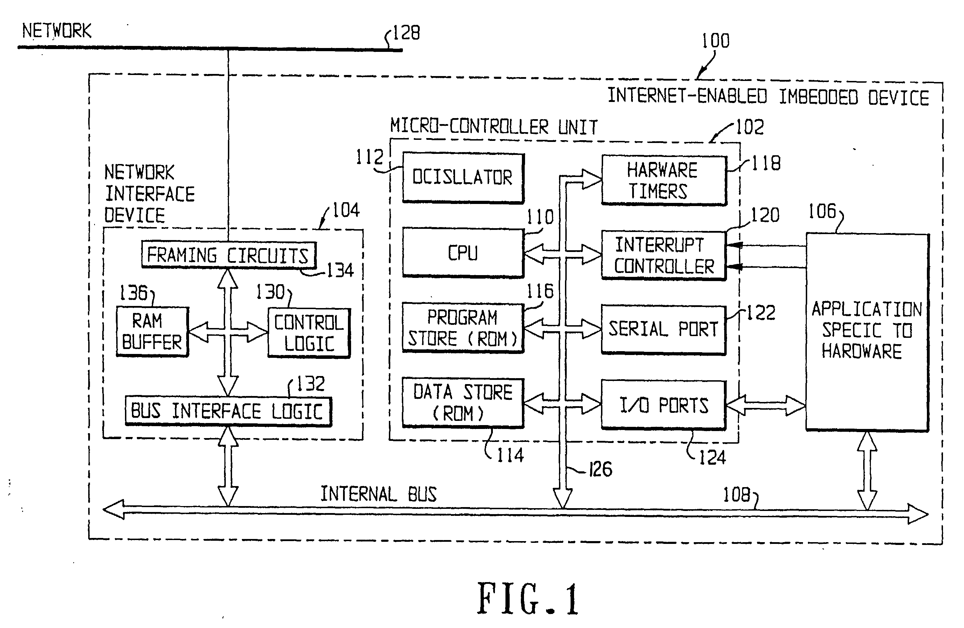

Fig. 1 shows a block diagram of the major components of the IEED. The IEED 100 includes a micro-controller unit (MCU) 102, a network interface device 104 and application-specific I/O hardware 106, all connected by an internal bus 108.

The micro-controller unit 104 includes the following components: a central processor unit (CPU) 110; an oscillator 112; memory (volatile and/or non-volatile) for storing the relevant data and instructions, such as random-access memory (RAM) 114, programmable read-only memory (ROM) 116, EEPROM (not shown) or Flash ROM (not shown); peripheral circuits, such as timers/counters 118, an interrupt controller 120, a serial port 120 and I/O (input/output) ports 124; and a bus interface 126 for accessing circuits external to the MCU 104 over the internal bus 108. An example of micro-controller usable as the MCU 104, for which the preferred embodiment is optimized, is an Atmel AT89S8252, which contains an 8-bit CPU, 8KB Flash ROM for storing program instructions, 256 bytes of RAM, 2KB of data EEPROM, three 16-bit timers/counters and one serial UART port.

The network interface device 104 connects the IEED 100 to a network 128 (e.g. Ethernet LAN or serial link). An example of a network interface device 104 is an Ethernet network controller, such as the Cirrus CS8900A single-chip Ethernet controller, which handles the physical layer network protocol IEEE 802.3. An Ethernet network controller contains four logical sections, namely, control logic 130, a host bus interface 132, a physical or framing circuit 134 and a static RAM buffer 136 for temporarily storing incoming/outgoing network frames.

Another example of a network interface device 104 is standard UART circuit that handles the serial link physical protocol. A UART circuit can be an integral part of the MCU 102.

In order to transmit and receive network frames through the network interface device 104, the MCU 102 implements a corresponding data link layer protocol, such as the Ethernet protocol (for an Ethernet LAN connection), or SLIP or PPP (for a serial link connection).

The application-specific I/O hardware 106, as the name suggests, is selected for the specific application for which the IEED 100 is intended. Examples include monitoring and remote control.

The IEED 100 runs a TCP/IP stack designed for reduced system requirements. The TCP/IP protocol stack design utilizes a design concept based on a specific concurrent model of computation that features simplicity, operating system independence, and efficient and easy implementation.

The TCP/IP stack is based on a model of computation in which a software module is composed of the following three entities: processes, signals, and data structures. A process is an autonomous, concurrent unit of computation. A signal is a binary variable which is used for interaction between processes. Data structures store the module's state information and are used to communicate data among processes.

Each process is characterized by discrete behavior and can be modeled as a combined flow-chart and state diagram (FCS diagram). The FCS diagram is composed of a set of sequential data-flow sections connected by state symbols. To each process state a set of outgoing arcs, each of which is associated to a Boolean expression of input signals, is connected. An outgoing arc (i.e., transition) is enabled if the corresponding Boolean expression is evaluated to be true. A process leaves a current state when one of the outgoing arcs becomes enabled. Then the process precedes computation through the data-flow section, indicated by the enabled outgoing arc, until a new state is reached. A path through an FCS diagram that connects two states (which may or may not be distinct) is called a reaction. Each reaction takes a finite time to be processed. To simplify the notation, every state is assumed to have an implicit self-transition. i.e., an arc going back to the same state, which is enabled any time when no one of the outgoing arcs is enabled. A reaction which corresponds to the self-transition is called dummy reaction, i.e., does not contain any useful processing.

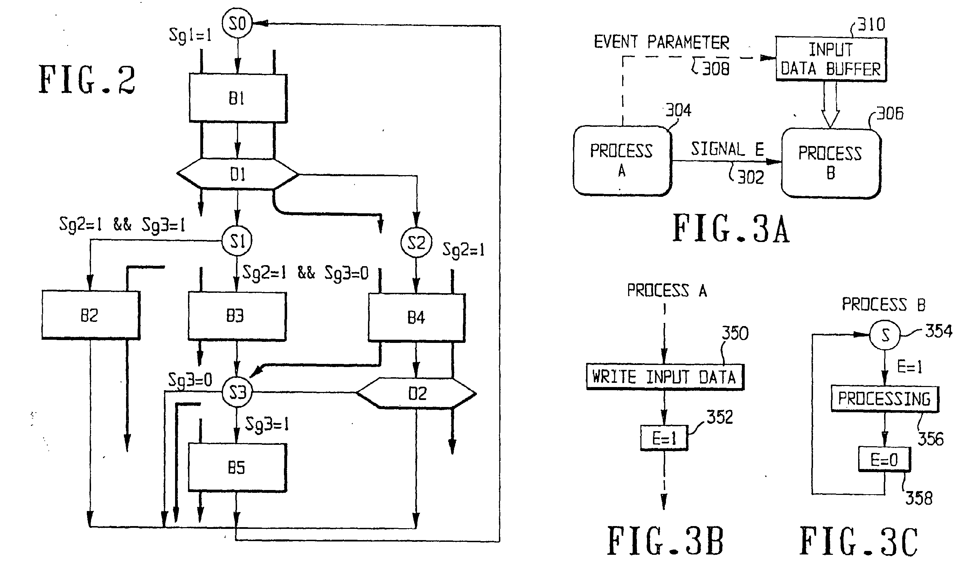

An example of an FCS diagram is shown in Fig. 2. Process states are indicated by circuits (S0, S1, S2, and S3); rectangles (B1, B2, B3, B4, and B5) represent sequential processing blocks, while D1 and D2 correspond to decision blocks. Depending on current process state, the state of the input signals (Sg1, Sg2, and Sg3), and the result of internal computation, a process can react in one out of eight possible ways, as indicate by thick lines in Fig. 2. Fig. 2 illustrates the basic concepts of an FCS diagram and should not be construed as limiting the present invention.

Such diagrams will now be used to illustrate the TCP/IP stack implemented by the preferred embodiment. A kind of controlled preemptive approach is used to divide the CPU between the various processes. In this approach, processes are implemented as subroutines, which are sequentially invoked from a central program loop. At each loop iteration each process is invoked exactly once. At each invocation, the process executes exactly one reaction and then relinquishes control so that the other processes gain the opportunity to execute. Consistency of the model is insured by dummy reactions such that any time process has exactly one reaction to execute. This multi-tasking processing is easy to implement even in assembly language and does not require any kind of operating system support, while insuring that the IEED is responsive to the network and application requests on a near real-time basis.

Some means for inter-process synchronization and communication are needed in order to ensure proper cooperation and coordination among concurrent processes. The following three types of synchronization mechanisms are distinguished:
(1) Asynchronous event;
(2) One-to-one handshake; and
(3) Many-to-one handshake;

Fig. 3A shows the principle of the asynchronous event mechanism. Signal E 302 is used to transport events from Process A 304 to Process B 306. Process A 304 generates an event by setting the signal E 302, and by writing an event parameter 308 into shared data structure "Input Data Buffer" 310. After that, Process A 304 continues without waiting for any response from the destination Process B 306. On the other side, Process B 306 waits for an event to arrive (i.e., it continuously checks the signal E 302 to determine when the value of signal E 302 becomes one); after the event has arrived, process B 306 reads event parameters 308 from the Input Data Buffer 310, carries out some processing, completes the event (i.e., resets the signal E 302), and finally returns to the waiting state. Note that the black arrowhead on the signal line indicates the destination process.

The FCS diagrams that specify the behavior of processes A and B 304, 306 involved in event generation and completion, respectively, are shown in Figs. 3B and 3C, respectively. As shown in Fig. 3B, process A 304 writes the input data (event parameter) 308 into the input data buffer 310 in processing step 350 and sets the value of signal E 302 to one in processing step 352. As shown in Fig. 3C, process B 306 checks the value of signal E 302 in processing state S 354. Once the value of signal E 302 is determined to be one, process B 306 performs the needed processing in processing step 356, sets the value of signal E 302 to zero in processing step 358 and resumes state S 354.

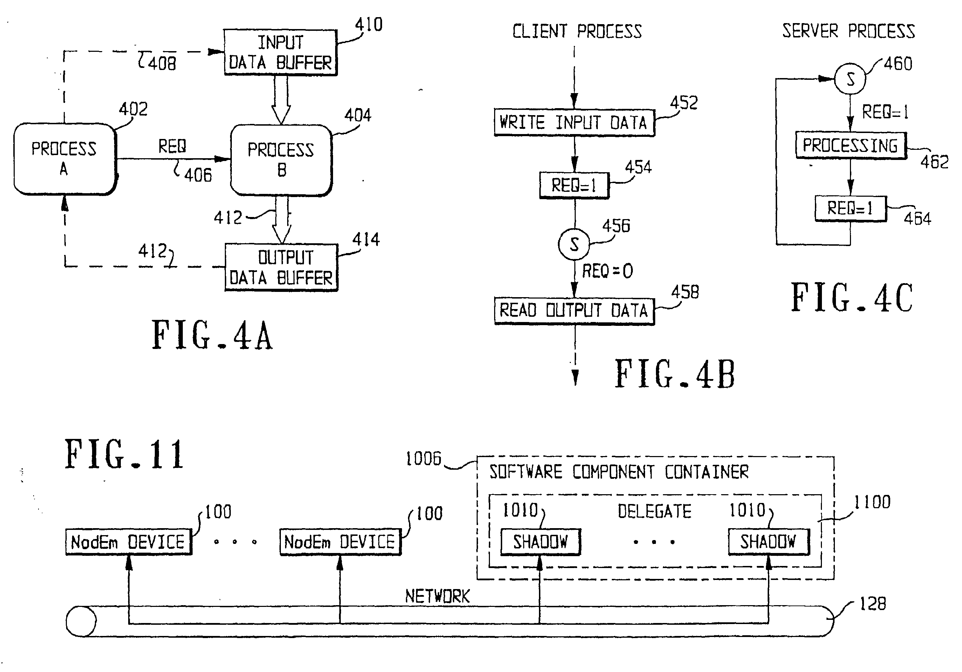

A one-to-one handshaking mechanism provides a blocked synchronization between two processes, as shown in Fig. 4A. In this configuration, Process A (client process) 402 issues a request to Process B (server process) 404 by setting a signal Req 406, and after that, instead of continuing processing, Process A 402 waits for Process B 404 to respond by resetting signal Req 406. On the other side, process B 404 waits for the request, then performs the required processing on the input data 408 which Process A 402 has written into an input data buffer 410, and finally writes the output data 412 into an output data buffer 414 for reading by Process A 402 and responds to the requesting Process A 402. Note that the black arrowhead on the signal line indicates a server process, while the white arrowhead indicates a client process.

The FCS diagrams that correspond to client and server process involved in the one-to-one handshake interaction are shown in Figs. 4B and 4C. Process A 402, the client process, operates as shown in Fig. 4B. In processing step 452, Process A 402 writes the input data 408 into the input data buffer 410 for reading by Process B 404. In processing step 454, Process A 402 sets the value of signal Req 406 to one. In state S 456, Process A 402 waits for the value of signal Req 406 to be reset to zero. In processing step 458, Process A 402 reads the output data 412 which Process B 406 has written into the output data buffer 414. Process B 404, the server process, operates as shown in Fig. 4C. In state S 460, Process B 404 waits for the value of the signal Req 406 to become one. Then, in processing step 462, Process B 404 performs the required processing. In processing step 464, Process B 404 resets the value of the signal Req 464 to zero and then resumes the waiting state S 460. The one-to-one handshaking assumes a zero initial value for the signal Req.

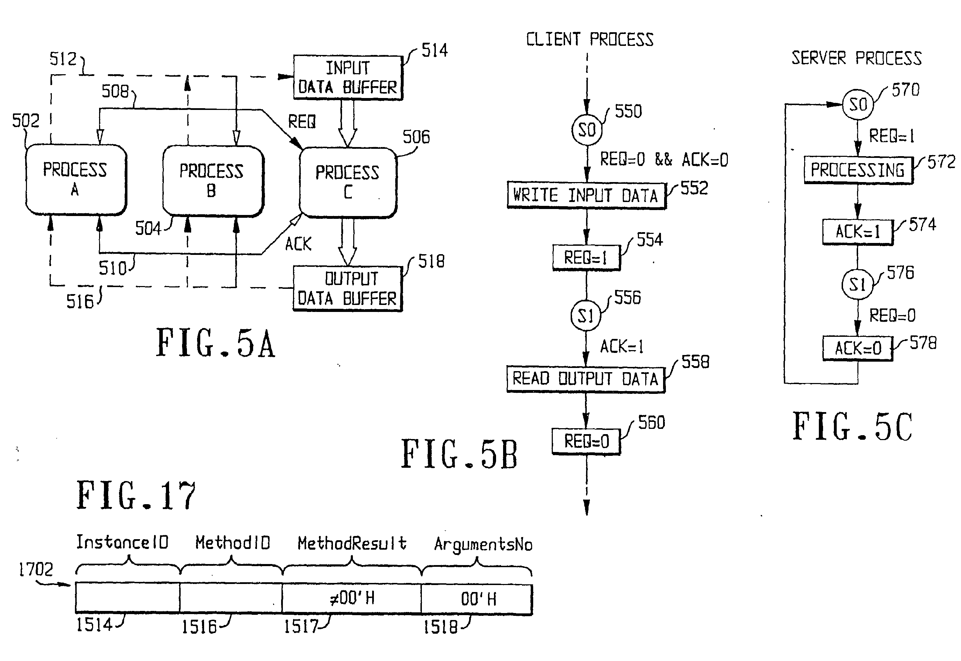

A many-to-one handshake mechanism is used to provide a correct blocked synchronization in configurations where more than one client process can request service from a single server process. This mechanism is illustrated in Fig. 5A. Processes A and B 502, 504 are clients, while process C 506 is a server. To resolve possible contentions among the client processes 502, 504, two signals, Req 508 and Ack 510, shared among all processes involved, are used. When a client process, such as process A 502, wishes to request service from the process C 506, first process A 502 waits for both signals Req 508 and Ack 510 to become zero, which indicates that the server process is ready and no other client process currently issues a request. When this condition is satisfied, Process A 502 issues a request by setting the value of signal Req 508 to one and passes input parameter data 512 (if any) to the Process C 506 by writing those data 512 into a shared data structure "Input Data Buffer" 514. After that, Process A 502 waits for Process C 506 to finish the requested service, which is indicated when Process C 506 sets the value of the signal Ack 510 to one. Then, Process A 502 accepts the output data 516 which Process C 506 has stored in an "Output Data Buffer" shared data structure 518, deactivates the Req signal 508 (Req=0), and continues processing. On the other side, server process C 506 waits for the request signal Req 508 to become active (that is, having a value set to one), and after that performs the requested processing, and than activates the Ack signal 510 (Ack=1), indicating end of processing to the client process. Then, the server process 506 waits for the client process 502 to relinquish the request signal Req 508 by setting its value to zero, deactivates the Ack signal 510 (Ack=0) and returns to the initial state.

The FCS diagrams describing client and server processes performing the many-to-one interaction are shown in Figs. 5B and 5C. Fig. 5B shows the operation of a client process and applies equally to Process A 502 and Process B 504. In state S0 550, the client process waits for the values of the Req and Ack signals 508, 510 to go to zero so that the client process knows that it may make a request. In processing step 552, the client process writes the input data 512 into the input data buffer 514. In processing step 554, the client process sets the value of the Req signal 508 to one. In state S1 556, the client process waits for the value of the Ack signal 510 to go to one. Once that happens, the client process reads the output data 516 from the output data buffer 518 in processing step 558 and sets Req=0 in processing step 560. Fig. 5C shows the operation of a server process. In state 50 570, the server process waits for the value of the signal Req 508 to go to one. Once that happens, the server process performs the requested processing in processing step 572 and sets Ack=1 in processing step 574. In state S1 576, the server process waits for the client process to set Req=0. Then, in processing step 578, the server process sets Ack=0 and resumes the waiting state S0 570. The many-to-one handshaking assumes zero initial values for both the signal Req and the signal Ack.

Note that the consistency of data structures as well as signals involved in all three types of process interaction is preserved by the atomic nature of the reactions, i.e., since each process accesses them within a single reaction.

The TCP/IP stack of the preferred embodiment overcomes the above-noted problem of the memory requirement for storing data packets in the following manner. Rather than implementing a "copy-then-process" strategy as is done in other implementations, received packet data bytes are directly accessed and processed by the protocol software in an "on-thefly" fashion, i.e., sequentially, as they come from the network. Also, when transmitting a packet, the protocol stack sends data bytes directly to the network (or more precisely to the network interface device) as they are produced. In this way, memory required to store packet data is minimized. An implication of such a strategy is that the protocol software, at any time, can process at most one arriving network packet. Note that this implication is not an limitation of the preferred embodiment but, instead, it is the main enabling design feature for functioning under rigid memory constraints. If memory constraints are relaxed, then the "on-the-fly" processing can be applied on input-output buffers instead of the network interface device directly.

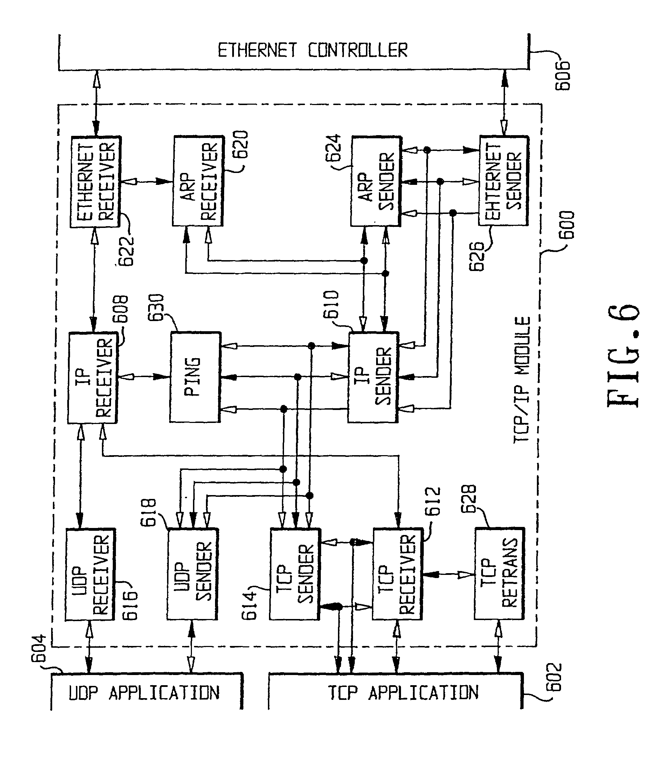

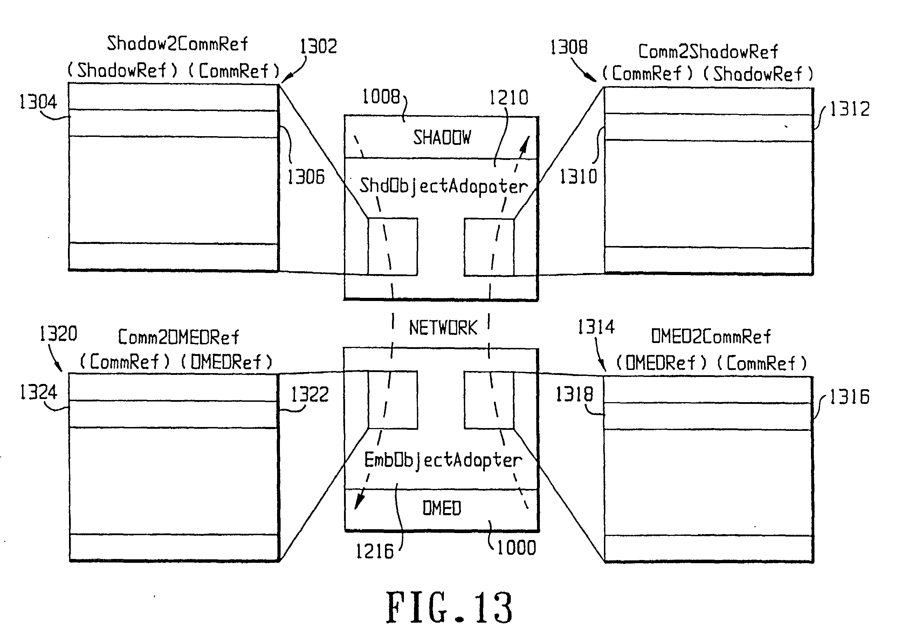

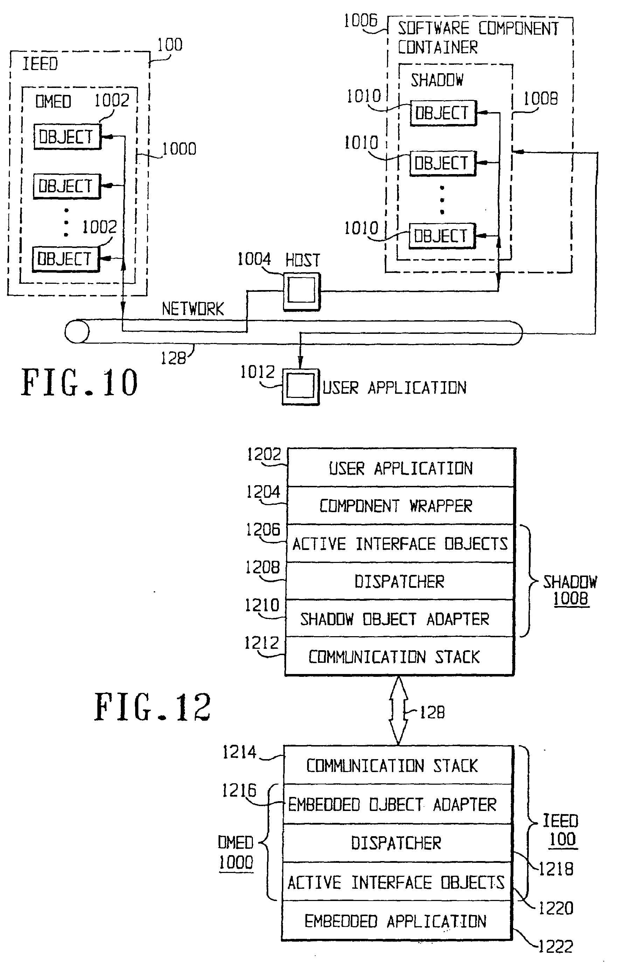

A communication module is structured as a collection of interacting and communicating light-weighted processes and data structures used for inter-process communication, and for storing the communication module's state information. The process structure of the communication module implementing a TCP/IP stack 600, as it communicates with a TCP application 602, a UDP application 604 and an Ethernet (or other network) controller 606, is given in Fig. 6. As can be seen from Fig. 6, each protocol module in the TCP/IP stack 600 is decomposed into at least two processes: a Receiver process and a Sender process. Receiver processes are involved in received packet processing, while Sender processes compose packets that are sent to the network. More specifically, the TCP/IP stack 600 is centered around an IP receiver process 608 and an IP sender process 610. Those processes 608, 610 communicate with the TCP application 602 through a TCP receiver 612 and a TCP sender 614; with the UDP application through a UDP receiver 616 and a UDP sender 618; and with the Ethernet controller through an ARP receiver 620, an Ethernet receiver 622, an ARP sender 624 and an Ethernet sender 626. Also, there are some internal processes that are not directly involved in packet processing and are not provided in receiver/sender pairs. Such processes include a TCP Retransmitter Process 628 which handles the retransmission of TCP packets and a Ping Process 630 which provides the response of the TCP/IP protocol stack 600 to ping requests.

Such a process structure is primarily influenced by the need for efficient handling of the information flow through the protocol stack. The protocol stack generally deals with information flowing in two directions: from a user application above (outgoing packets) and from a network device below (incoming packets). Incoming packets arrive from the network and moved up through the successive layers of the protocol stack until all headers are processed and stripped away and "pure" data are delivered to the user application. However, not all incoming packets reach the user application. In some cases, incoming packet can be discarded by the protocol stack due to an error detected in some header data, or due to an unsupported protocol type. Also, some network packets, such as TCP control packets, are intended for the protocol stack itself. The protocol stack reacts to such packets by changing its internal state and/or by sending back an appropriate response packet. Outgoing packets can be initiated by either a user application or an internal event generated within the protocol stack, such as reception of a Ping request or TCP Retransmitter timeout.

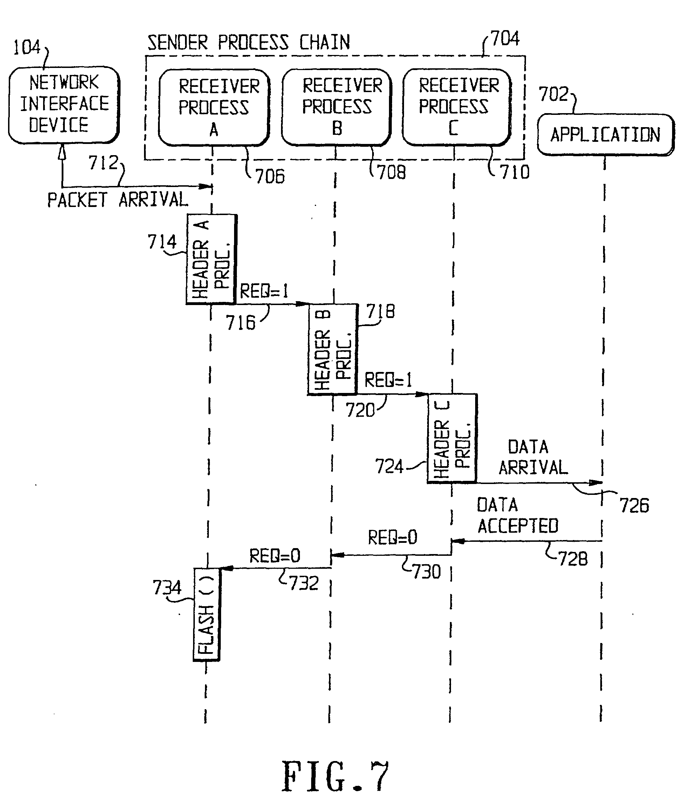

In order to accomplish the required information flow control, the internal processes of the TCI/IP stack need to be tightly synchronized. To that end, as shown in Fig. 7, communication from the network interface device 104 to an application 702 passes through a chain 704 of receiver processes, including receiver process A 706, receiver process B 708 and receiver process C 710. The one-to-one handshaking mechanism described above carries out synchronization among the receiver processes 706, 708, 710 in the chain 704. Initially, all Receiver processes are inactive, i.e., they wait for the request signal from the Receiver process from the previous protocol stack's layer. When activated, each Receiver process can directly access the network interface device in order to read incoming packet data. After processing the header data, a Receiver process de-multiplexes control and passes the relevant data to one of the Receiver processes at the next higher protocol stack layer (according to the value of the protocol type field contained into the processed header), and then it blocks until the invoked Receiver process returns a response signal. Note that in that moment, the next data byte that is to be read from network interface device is the first byte of header that should be processed by the invoked Receiver process. In this way, as processing of the incoming packet continues, a chain of Receiver processes is formed, where the last process in the chain is active, processing its part of the incoming packet, while all previous processes are inactive, waiting in the blocked state. In short, when a packet arrives from the network interface device 104 at 712, the chain 704 of receiver processes 706, 708, 710 engages in stages of header processing 714, 718, 724 alternating with sending of the Req signal 716, 720, 726. When the processing of the incoming packet is finished (whether data are delivered to the user application, or during header processing some abnormal condition is encountered which requires an incoming packet to be discarded), the currently active process deactivates the request signal at 728 and returns to the waiting state. This action causes the chain to be "broken", i.e., initiates all Receiver processes down to the chain to do the same: to relinquish the request signal at 730, 732 and return to the waiting state. Finally, when the Data link Receiver process (Receiver process A 706 in Fig. 7) gets a response signal it performs a Flash() operation 734 which discards the remaining incoming packet data (if any), goes into a waiting state and becomes ready to accept a new request from the network interface device 104.

Similarly as with incoming packet handling, the processing of outgoing packets from an application 802 is based on dynamic creation of a Sender process chain 804 of sender process C 806, sender process B 808 and sender process A 810. However, while the network interface device represents a single point of Receiver process chain initiation, such a single point does not exist when outgoing packets are concerned. A Sender process chain can be initiated by: (1) an application; (2) a Receiver process, such as ARP_Receiver, or TCP_Reciver, and (3) an internal process, such as TCP_Retransmitter. Thus, at the same time, within the protocol stack, there can be more than one active, disjoint Sender process chains, each trying to reach the Data Link Sender process. For example, it may happen that an ARP response is initiated by the ARP Receiver process while the Sender process chain which links the processes: TCP Transmitter, IP Transmitter and Data Link Transmitter, handles an application request. In such a situation, a conflict may arise when ARP Sender process tries to expand process chain to the currently active Data Link Sender process.

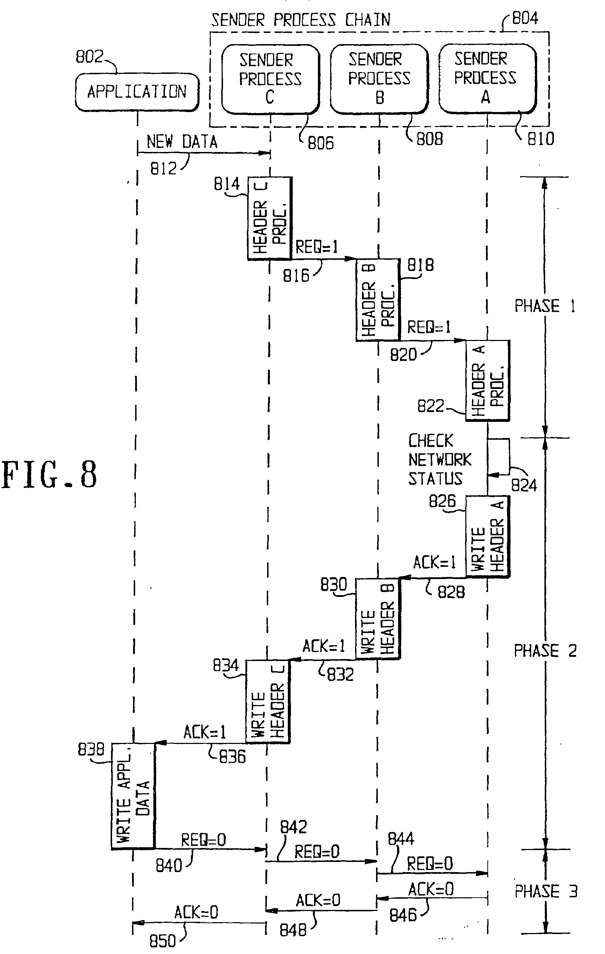

In order to resolve potential conflicts among Sender processes, a synchronization mechanism based on many-to-one handshaking is employed (Fig. 8). As can be seen from Fig. 8, forming and sending an outgoing packet involves three phases.

In the first phase, the Sender process chain 804 is formed. A request signal issued by the application 802 or an initiating Sender process to send new data 812 is propagated down through the protocol stack linking Sender processes into a process chain by successive processes of header processing 814, 818, 820 and sending of request signals 816, 820. After it becomes a member of a new process chain, the Data Link Sender process (Sender process A 810 in Fig. 8) starts testing readiness of network interface device in step 824 to accept and transfer new network packet.

The second phase begins when the Data Link Sender process gets a positive response from the network interface device. The Data Link Sender process prepares and writes data link protocol header data into the network interface device, and returns an acknowledgement signal back to the previous Sender process in the chain. After receiving the acknowledgement signal, a Sender process prepares and writes its data, by directly accessing the network interface device, and then passes the acknowledgement signal backward. Thus, the second phase includes alternating steps of header writing 826, 830, 834 and sending of acknowledgment signals 828, 832, 836. The second phase is finished when the initiating Sender process writes its data in step 838. At that moment, the whole packet is transferred to the network.

During the final, third phase, the Sender process chain 804 is broken. This activity involves successive deactivation 840, 842, 844 of the request signals down to the process chain, and then successive deactivation 846, 848, 850 of the acknowledgement signals upward the chain.

During the first phase, the creation of the Sender process chain can be terminated, before the Data Link Sender process is reached, if a Sender process detects an error condition. For example, the IP Sender process can terminate the operation of Sender process chain creation if the destination host IP address cannot be found in the protocol stack's ARP cache table. Also, the Data Link Sender process can terminate this operation if a positive response from the network interface device is not received after a specified timeout interval. In the case of error, the Sender process which detects the error does not continue to expand the Sender process chain, but immediately returns back an acknowledgment signal together with an Error status. When a Sender process receive the acknowledgment signal accompanied with the Error status, it discards its data and propagates the acknowledgment signal and the Error status backward the chain. In this way, the partially formed process chain is broken, and the initiating Sender process is informed that the packet transmission operation has failed.

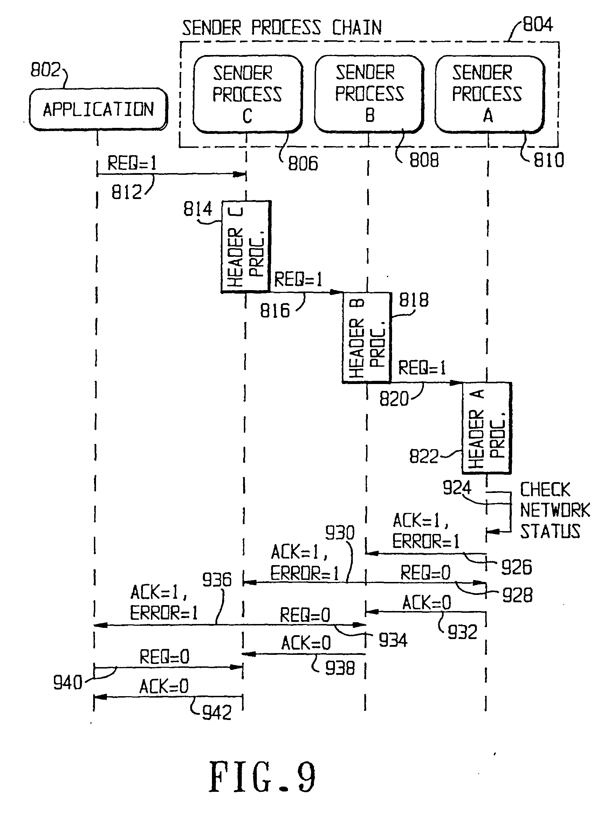

This scenario is illustrated in Fig. 9. The process of Fig. 9 proceeds like that of Fig. 8 up through step 822. Then, in step 924, the network status is checked, and a failure is detected. In step 926, sender process A 810 sends sender process B 808 acknowledgment and error signals, both with their values set to one. In step 928, sender process B 808 sends a request signal whose value is zero to sender process A 810, and in step 930, sender process B 808 sends sender process C 806 the acknowledgment and error signals whose values are one. In step 932, sender process A 810 sends sender process B 808 an acknowledgment signal whose value is zero. In steps 934-938, the communication of steps 928-932 is repeated, except one step up along the chain. That is, in step 934, sender process C 806 sends the request signal whose value is zero to sender process B 808, and in step 936, sender process C 806 sends the application 802 the acknowledgment and error signals whose values are one. In step 938, sender process B 808 sends sender process C 804 the acknowledgment signal whose value is zero. If there are more than three sender processes in the chain 804, steps 928-932 can be repeated for each link in the chain. In step 940, the application 802 sends the sender process C 806 the request signal whose value is zero. In step 942, the sender process C 806 sends the application 802 the acknowledgment signal whose value is zero.

A TCP/IP stack with low system requirements has been presented for use in an embedded device. Further resource savings can be implemented through a technique called shadowing, which will now be explained.

Embedded devices are usually characterized by rigid computational and memory resource constraints, and any significant increase in resource requirements often results in an unacceptable cost increase. To avoid such a cost increase, the preferred embodiment implements a Shadowing software architecture that keeps overhead in the IEED low while permitting the functionality of the IEED to be visible on the network in the form of network object.

The Shadowing software architecture consist of two components:
1) Object Model of Internet-enabled Embedded Device functionality (OMED), and
2) Shadow - a software component representing the OMED on the network.

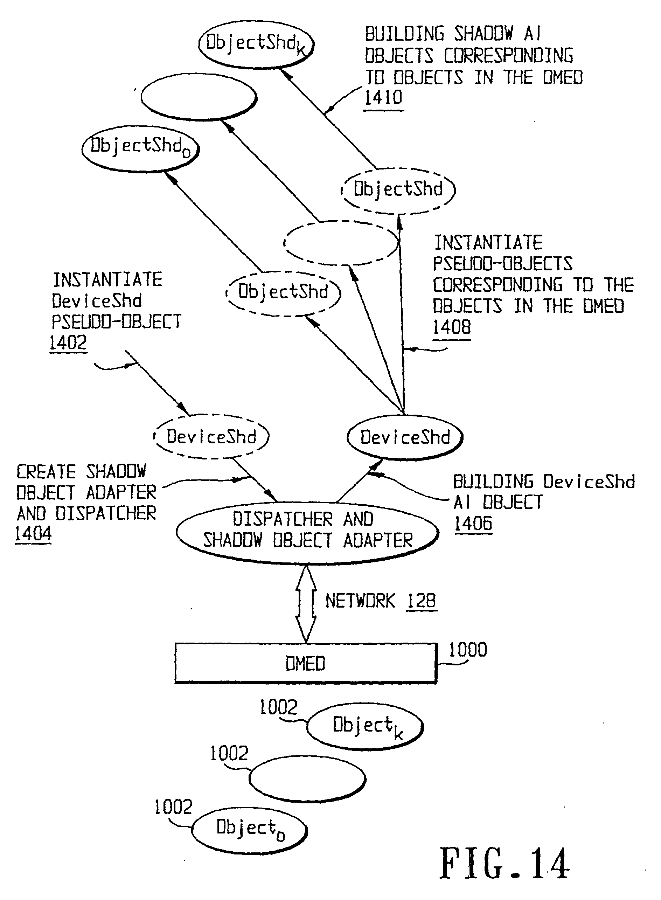

The Shadowing software architecture is shown in Fig. 10. This architecture assumes an IEED as described above, i.e. assumes direct connectivity of the embedded device 100 to the network 128, for example by using TCP/IP protocol.

Direct connectivity of the IEED 100 to the network 128 implies that the IEED 100 has its own network address assigned to it (in the case in which the network is the Internet, the network address is the IP address), which further has as a direct consequence arbitrary allocation of Internet sites for each of the system components, including a user application. For example, the IEED 100 can be disconnected from one Internet location and connected to any other Internet location that is correct with respect to IP address assignment rules. Such a system will still work without any further intervention such as installing new hardware or software (in the case of site reallocation, setting of configuration parameters may be required). The Shadow has even higher mobility than the IEED 100. The IEED 100 is a physical device, while the Shadow is a software component that can be installed and executed on any host on network having an appropriate software component container. The Shadow is typically run on a host computer of a user who wishes to interact with the IEED.

OMED 1000 is an object-oriented representation of the IEED 100, in which objects 1002 represent the functions of the IEED 100 to be made available to user applications together with configuration and personality data about the IEED 100 itself. For example, if the embedded device 100 has a signal light and a push-button, OMED 1000 could be designed to include one object 1002 representing the signal light, one object 1002 representing the push-button, and one object 1002 representing parameters of the device such as manufacturer ID, IP address, Ethernet address, etc. The host 1004 is a hardware/software platform (for example, a PC) with a software component container 1006 capable of running the Shadow 1008. The Shadow 1008 has a set of objects 1010 corresponding to the objects 1002 in OMED 1000. The user application 1012 uses the IEED's functionality as an integral part, gathering information from the IEED, controlling the IEED, and/or communicating with it, but accessing the Shadow 1008, instead of the device 100 itself. With OMED 1000 and Shadow 1008, a user can remotely interact with the IEED 100 through Shadow 1008 running on the host computer 1004.

Connection is the ability of actors (i.e. computers, or devices) included in the connection to communicate mutually in a manner pre-specified by the connection, using the same set of network protocols and the network. A one-to-one connection is a connection that involves two actors only. If an actor is involved in exactly one connection, then this actor has a one-connection-per-actor type of connection. Note that multiple actors, all having one-connection-per-actor connections, can communicate with the same actor on the other side of the connection, provided that the actor on the other side does not have one-connection-per-actor connection.

There is at most one Shadow representing an IEED on the network. As a consequence, the IEED has a one-connection-per-actor type of connection. The oneconnection-per-actor connection type delivers at least two advances with respect to the optimization of the IEED software:
1. Communication protocol software can be simplified because managing multiple simultaneous connections is not required, and
2. All protocols over the connection (for example, transaction protocol, or connection management) can be optimized because there are exactly two actors involved (device and its Shadow), and these actors are known in advance.

The one-connection-per-actor connection type does not introduce restrictions on system architecture; it just migrates workload from the IEED to its Shadow. All functionality that the system offers to and/or requires from the IEED encounters the Shadow instead of encountering the IEED directly. System architecture based on a Delegate object is given in Fig. 11. The Delegate object 1100 is introduced to represent a system of multiple IEEDs 100, in a unified and hierarchical way. Note that there is no restriction on the policy for the Delegate instantiation. For example, one expected usage assumes the Delegate to be a software component object instantiated from a corresponding software component.

The Shadow 1008 is implemented in the Java programming language. In one aspect of the invention, the Shadow 1008 is compiled as an ActiveX component and in this form is made available to the developer of a user application. The developer accesses Shadow in design time, and uses it in the application in the same way as other ActiveX components without any knowledge about what particular IEED Shadow represents. In the run time, Shadow is connected to the IEED specified by a given IP address, and from that moment Shadow keeps maintaining its state and behavior consistent with the state and behavior of its IEED. Note that, instead of an ActiveX component, a more general COM component, or a component based on any other component technology, can be used for packaging the Shadow. An ActiveX component is simply expected to be the most convenient for developers because it integrates the visual appearance of the Shadow.

In a second aspect, the Shadow is compiled as Java applet. Functionality of the IEED is not available in design time. Instead, the IEED behaves as a web server and can be accessed by a web browser. The IEED contains a small HTML page that references a Java applet representing the Shadow. When a web browser accesses the IEED, a TCP connection between the browser and the IEED is established, and the HTML page together with the Shadow applet is transferred from the IEED to the browser using a minimal subset of the HTTP protocol required for the single request and the single HTML page transfer. After the transfer, the existing TCP connection between the browser and the IEED is destroyed. After that, the Shadow applet is started, and now the Shadow opens a new TCP connection to the IEED. In this case, the Shadow receives user commands from, and displays the IEED state on, the graphical interface of the browser. In the example noted above, where the IEED 100 has a push-button and a signal light, the Shadow 1008 can provide on-screen representations of those two components, the former for the user to click on and the latter for the user to observe, so that the user can remotely use the IEED.

The IEED 100 (through the OMED 1000) and the Shadow 1008 operate through a layered software architecture shown in Fig. 12, in order to encapsulate and localize communication and functional parts. On one side of the network 128 are the following layers: the user application 1202, the component wrapper 1204, the active interface objects 1206, the dispatcher 1208, the shadow object adapter 1210 and the communication stack 1212. The layers 1206-1210 are comprised by the Shadow 1008. On the other side of the network 128 are the following layers: the communication stack 1214, the embedded object adapter 1216, the dispatcher 1218, the active interface objects 1220 and the embedded application 1222. The layers 1214-1220 are comprised by the IEED 100, and the layers 1216-1220 are also comprised by the OMED 1000, which by itself does not need a communication stack 1214.

The software layers in the Shadow 1008 and the IEED 100 are symmetrical with respect to the physical network 128 because the respective layers perform identical functions in different contexts. There are three contexts in the system:
1. Shadow context,
2. OMED context, and
3. Communication context, each of them defining the corresponding data representation, object references, object behavior and event model. Shadow context is defined by a software component container that is used for hosting Shadow, while OMED context is defined by a programming language used in an embedded application. Communication context defines how data, object references, object behavior and events are represented by messages used for communication between the Shadow and OMED contexts.

Active Interface encapsulates firmware structure and behavior representing the network-exposed interface to the underlying embedded application. Active Interface is structured as a collection of objects, each of which represents a part of overall embedded application functionality (Fig. 10). Active Interface Objects (AIO) have the same class description in both Shadow and OMED contexts, but different object layouts optimized for particular context.

AIOs are defined by a two-level meta-object protocol. Object class description is defined at the lower level. Objects instantiated at that level are intended to be used in the presentation of the IEED functionality. At the second level, objects are defined as software components or blocks. The second level provides for auto and remote configuration, for interoperability with existing and emerging software component technologies, as well as distributed object middlewares, and for automated design tools based on the preferred embodiment. Such two-level organization provides the ability to imply reflection on any of these two levels, and so opens space for new optimizations. Structuring both Shadow and OMED AIOs based on the meta-object protocol provides two essential advantages:
1) Dynamic (run-time) building of the Shadow objects based on meta description from the OMED, and
2) Using existing widely used DOC middlewares as a remote elastic process.

Fig. 13 shows the interactions and object reference mapping between the contexts. The shadow object adapter 1210 of the Shadow 1008 and the embedded object adapter 1216 of the OMED 1000 communicate over the network 128. Communication from the Shadow 1008 to the network 128 is handled by means of a Shadow2CommRef (shadow to communication reference mapping) object 1302. The Shadow2CommRef maps shadow reference objects 1304 into object references in the communication context 1306. Communication from the network 128 to the Shadow 1008 is handled by means of a Comm2ShadowRef (communication to shadow reference mapping) object 1308. The Comm2ShadowRef maps object references from the communication context 1310 into shadow reference objects 1312. Communication from the OMED 1000 to the network 128 is handled by means of OMED2CommRef(OMED to communication reference mapping) object 1314. The OMED2CommRef maps object references from the OMED context 1318 into object references from the communication context 1316. Communication from the network 128 to the OMED 1000 is handled by means of a Comm2OMEDRef (communication to OMED reference mapping) object 1320. The Comm2OMEDRef maps object references from the communication context 1324 into object references from the OMED context 1322.

The references from the communication context in Shadow2CommRef 1306, in Comm2ShadowRef 1310, in OMED2CommRef 1316, and in Comm2OMEDRef 1324 all have identical values. The shadow reference objects 1304 from Shadow2CommRef are identical to the shadow reference objects 1312 from Comm2ShadowRef. The object references from the OMED context 1318 from OMED2CommRef are identical to the object references from the OMED context 1322 from Comm2OMEDRef. The only difference between Shadow2CommRef 1302 and Comm2ShadowRef 1310 is that Shadow2CommRef 1302 searches for a given shadow reference object and retrieves corresponding references from the communication context, while Comm2ShadowRef 1310 searches for a given reference from the communication context and retrieves corresponding shadow reference object. The same relationship holds between OMED2CommRef 1316 and Comm2OMEDRef 1324. Initially, only object references from the OMED context have assigned values, while values for all other object references are assigned during the shadow initialization procedure to provide correct reference mapping.

A client application never interacts with the embedded device directly, but always through Shadow. When the client application invokes an operation on a Shadow Active Interface Object, the Dispatcher is responsible for delivering the request to the IEED and returning the response. TCP protocol is used for communicating requests/responses between the IEED and its Shadow. Also, there is a provision for the IEED to emit event message signaling an internal asynchronous event. In this way, Shadowing allows the client application to invoke operations on the IEED without concern for the underlying implementation details.

The procedure for building of Shadow Active Interface Objects is given in Fig. 14. Initially, in step 1402, the pseudo-object DeviceShd is instantiated. In step 1404, the shadow object adapter and dispatcher is created. The pseudo-object DeviceShd and the shadow object adapter and dispatcher represent the kernel sufficient for initiating the procedure of building Shadow AI objects. The shadow object adapter and dispatcher provide reliable communication services at the level of method call so that Shadow AI objects can seamlessly call methods and receive results of the method's execution from corresponding OMED objects 1002. In step 1406, out of the pseudo-object DeviceShd and the meta-data description of the OMED 1000 stored in the OMED 1000 itself, the DeviceShd object is created. Level of details of the meta-data description that the pseudo-object DeviceShd gets from the OMED 1000 may be different. In this way, full meta-data description may be distributed for storage in the OMED 1000, the Shadow 100, the Shadow's Host computer 1004, or even any other host on the network 128. For example, the OMED 1000 may store all meta-data necessary for building DeviceShd object, or may store just unique identificator that pseudo-object DeviceShd uses for retrieving full meta-data description from the Shadow's local storage. To make this procedure fully consistent with the object reference resolution procedure given in Fig.13, the CommRef of OMED object 1000 is assigned a well-known value. In other words, for establishing its initial communication with the OMED 1000, the DeviceShd uses static method calls on the OMED object 1000. The non-pseudo DeviceShd object is fully capable to represent the OMED object 1000 on the network, but after the step 1406 it still does not have instantiated Shadow AI objects representing behavior and data of the corresponding objects 1002 of the OMED 1000. In step 1408, the pseudo-objects corresponding to the objects 1002 of the OMED 1000 are initialized using the class description of the DeviceShd object. In step 1410, the Shadow AI objects are built out of pseudo-objects in a similar way to what was done with the DeviceShd object.

In particular, the "Active Interface - Dispatcher" pair in the Shadow context functions as an object proxy (related to Shadow as an Active Object design pattern), while the corresponding pair in the OMED context has a function of an object stub. The functionality of the Shadowing DOC model is reduced and optimized to meet the rigid resource constraints that are present in the IEED, in such a way that the Shadow can call all methods from any AI object in the IEED while the IEED can call just methods in the Shadow's AI objects representing event firing. However, the Shadowing DOC model is sufficient to make an application developer free of dealing with the complex task of integration of embedded system into a distributed Internet environment.

Shadow Object Adapter performs object marshaling and de-marshaling, i.e. mapping objects to (from) implementation space from (to) communication space. This includes object reference mapping, data types mapping, method invocation, etc.

There are three communication mechanisms that the Shadowing is based on:
1. Synchronous method call - Used for all AIOs and all methods, except when the asynchronous method call is used. The caller object sends request message to the called object. The called object executes the method specified in the request message, and sends a result back to the calling object by a reply message. After sending the request message, the calling object is blocked until receiving the reply message.
2. One-way asynchronous method call - Used for calling Invoke() method in the Event object. In this case, the calling object sends a request message and proceeds to execution immediately without waiting for a reply message. The called object receives the request message and processes it, but no reply message is sent. The request message is of the same format as in the synchronous method call.
3. Static method call - Static methods are defined in an IEED when no object reference is needed for the given behavior. Static methods represent behavior of default object that has assigned well-known default value for the reference in the communication context. For example, the default object may be an object that is on the top of object containment hierarchy in the OMED, and its reference in the communication context may be fixed to 0. For example, opening a connection to the IEED by the Shadow is implemented as a static method. For the static method, the communication mechanism is the same as for the synchronous method call.

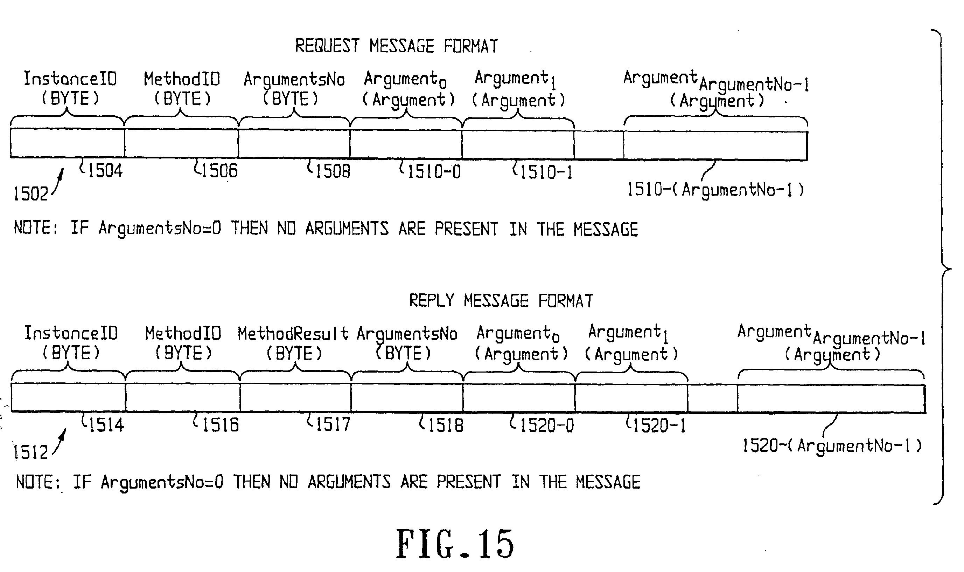

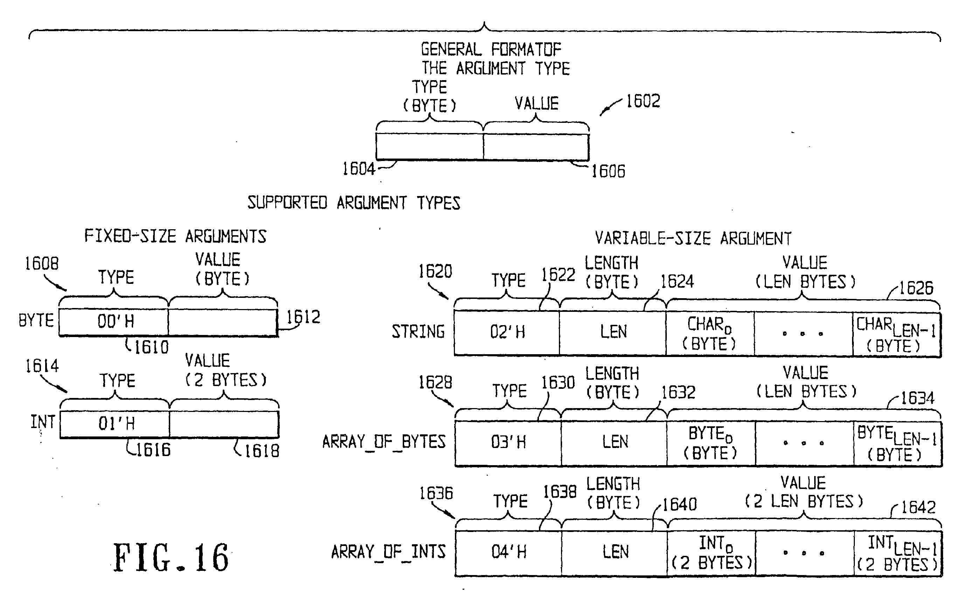

Message formats used for all Shadowing communication mechanisms are given in Fig.15, while the format of the Argument and supported data types are given in Fig.16. As shown in Fig. 15, the request message format 1502 includes an instance ID 1504 (one byte), a method ID 1506 (one byte), an indication 1508 of a number of arguments (one byte) and as many arguments 1510-0 through 1510-(ArgumentsNo-1) as are indicated in the indication 1508. If the indicated number of arguments is zero, there are no arguments present in the message. The reply message format includes a instance ID 1514 (one byte), a method ID 1516 (one byte), a method result 1517 (one byte), an indication 1518 of a number of arguments (one byte) and as many arguments 1520-0 through 1520-(ArgumentsNo-1) as are indicated in the indication 1518. Again, if the indicated number of arguments is zero, there are no arguments present in the message. Fields InstanceID and MethodID of the replay message contain the same values as the corresponding fields within the request message which initiates the synchronous method call.

As shown in Fig. 16, the general format 1602 of each argument includes a type indication 1604 (one byte) and a value 1606, which may be of fixed or variable length. There are two types of fixed-size arguments. A BYTE argument 1608 has a type 1610 set to 00'H and a value 1612 whose length is one byte. An INT (integer) argument 1614 has a type 1616 set to 01'H and a value 1618 whose length is two bytes.

There are three types of variable-size arguments. A STRING argument 1620 has a type 1622 set to 02'H, a length indication 1624 stored in one byte, and a value 1626 having the number of characters indicated in the length indication 1624. An ARRAY_OF_BYTES argument 1628 has a type 1630 set to 03'H, a length indication 1632 stored in one byte, and a value 1634 having the number of bytes indicated in the length indication 1632. An ARRAY_OF_INTS argument 1636 has a type 1638 set to 04'H, a length indication 1640 stored in one byte, and a value 1642 having the number of two-byte integers indicated in the length indication 1640.

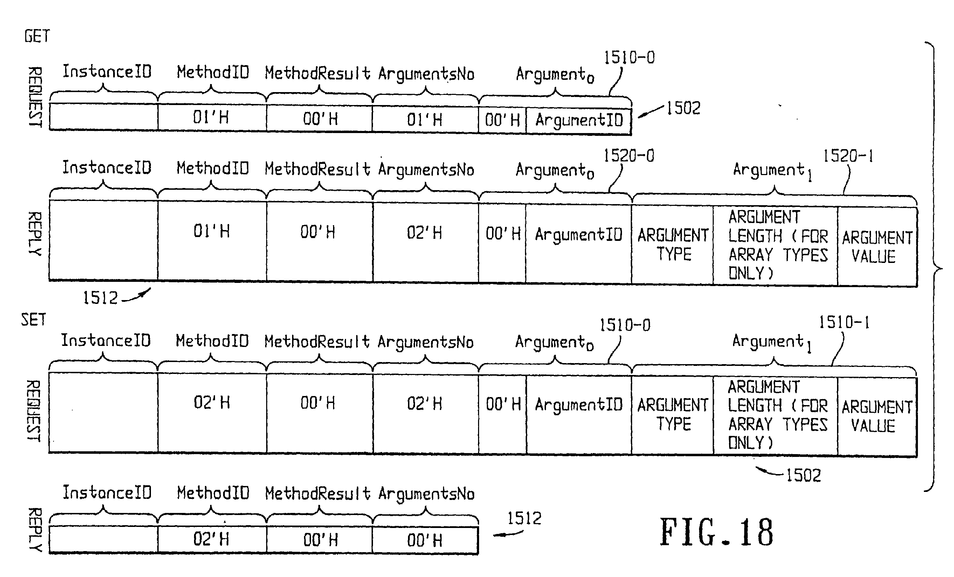

The Method Result field 1517 within the reply message 1512 is used to indicate the status of the method invoked by the corresponding request message. The value 00'H in this field indicates that the method is completed successfully, while any other value indicates that the method invocation has failed. The format of the reply message indicating a failed method invocation is given in Fig. 17. In the reply message 1702, the instance and method ID's 1514 and 1516 are the same as in the reply message 1512, while the method result has a value other than 00'H (which can be a preassigned error code) and the number of arguments 1518 is zero.

Two different method invocations are GET and SET, whose method ID's are 01'H and 02'H respectively. The messages are as shown in Fig. 18. In a GET invocation, the request 1502 includes an argument 1510-0 which is an argument of the BYTE type 1608 and whose value identifies the information to be gotten. The reply 1512 includes the same argument as its argument 1520-0 and at least one additional argument 1520-1 containing the information gotten. In a SET invocation, the request 1502 includes an argument 1510-0 which is an argument of the BYTE type 1608 and whose value indicates what is to be set, and at least one additional argument 1510-1 containing the value to be set. In the reply 1512, the method result is 00'H (operation completed successfully), while the number of arguments is zero, since no information beyond the success of the operation needs to be returned.

While a preferred embodiment of the present invention has been set forth in detail above, those skilled in the art who have reviewed the present disclosure will readily appreciate that other embodiments can be realized within the scope of the invention. For example, the objects usable in the IEED are not limited to those disclosed, but can be whatever objects are needed for any particular purpose. Also, disclosures of specific hardware, programming languages or the like are illustrative rather than limiting. Therefore, the present invention should be construed as limited only by the appended claims.

## Claims

1. A network-enabled embedded device comprising:
a processor;
a network interface device, in electronic communication with the processor, for connecting the device to a network; and
a memory, in electronic communication with the processor, for storing a network protocol stack for execution by the processor to control communication between the network-enabled embedded device and the network, the network protocol stack being implemented as a central program loop and a plurality of processes which are sequentially and preemptively invoked from the central program loop.

2. The network-enabled embedded device of claim 1, further comprising:
application-specific I/O hardware; and
an internal bus for providing electronic communication among the processor, the network interface device and the application-specific I/O hardware.

3. The network-enabled embedded device of claim 1, wherein the network protocol stack is a TCP/IP stack.

4. The network-enabled embedded device of claim 3, wherein the network is the Internet.

5. The network-enabled embedded device of claim 4, wherein the network interface device is an Ethernet adapter.

6. The network-enabled embedded device of claim 4, wherein the network interface device is a serial communication device.

7. The network-enabled embedded device of claim 3, wherein the TCP/IP stack is configured to receive and process incoming packet data bytes sequentially as the incoming packet data bytes are received through the network interface device, and to send outgoing packet data bytes through the network interface device as the outgoing packet data bytes are produced.

8. The network-enabled embedded device of claim 7, wherein the plurality of processes communicate with one another by using at least one of:
(i) an asynchronous event;
(ii) a one-to-one handshake; and
(iii) a many-to-one handshake.

9. The network-enabled embedded device of claim 8, wherein the TCP/IP stack provides:
(i) at least one input data buffer in which a first one of the plurality of processes leaves input data for a second one of the plurality of processes to process, and from which the second one of the plurality of processes reads the input data; and
(ii) at least one output data buffer in which the second one of the plurality of processes leaves output data which result from processing of the input data, and from which the first one of the plurality of processes reads the output data.

10. The network-enabled embedded device of claim 7, wherein, when an incoming packet is received from the network, at least some of the plurality of processes form a receiver process chain and process the incoming packet sequentially.

11. The network-enabled embedded device of claim 10, wherein , when an outgoing packet is to be sent to the network, at least some of the plurality of processes form a sender process chain and process the outgoing packet sequentially.

12. A system operating over a network, the system comprising:
(a) a network-enabled embedded device comprising:
a processor;
a network interface device, in electronic communication with the processor, for connecting the device to the network; and
a memory, in electronic communication with the processor, for storing a network protocol stack for execution by the processor to control communication between the network-enabled embedded device and the network; and
(b) a host computer, in communication with the network-enabled embedded device over the network, the host computer running a shadow program which emulates the network-enabled embedded device and allows a user of the host computer to interact with the network-enabled embedded device over the network through the host computer.

13. The system of claim 12, wherein the network protocol stack is implemented as a central program loop and a plurality of processes which are sequentially and preemptively invoked from the central program loop.

14. The system of claim 12, wherein:
the network-enabled embedded device comprises a plurality of device objects; and
the shadow program comprises a plurality of shadow objects, each of the plurality of shadow objects emulating one of the plurality of device objects.

15. The system of claim 14, wherein the shadow program further comprises an object storing data identifying the network-enabled embedded device.

16. The system of claim 15, wherein the data identifying the network-enabled embedded device comprise a network address of the network-enabled embedded device.

17. The system of claim 16, wherein the network address comprises an IP number.

18. The system of claim 14, wherein:
the plurality of device objects comprise an input device object for receiving an input from the user, and
the plurality of shadow objects comprise a an input shadow object emulating the input device object, the input shadow object receiving the input from the user and passing the input to the input device object.

19. The system of claim 14, wherein:
the plurality of device objects comprise an output device object for providing an output to the user; and
the plurality of shadow objects comprise a an output shadow object emulating the output device object, the output shadow object receiving the output from the output device object and passing the output to the user.

20. The system of claim 12, wherein the shadow program is invoked from a Web browser running on the host computer.

21. A method for interacting with a network-enabled embedded device over a network from a host computer, the network-enabled embedded device comprising: (i) a processor; (ii) a network interface device, in electronic communication with the processor, for connecting the device to the network; and (iii) a memory, in electronic communication with the processor, for storing a network protocol stack for execution by the processor to control communication between the network-enabled embedded device and the network; the method comprising:
(a) establishing communication with the network-enabled embedded device over the network; and
(b) running a shadow program on the host computer which emulates the network-enabled embedded device and allows a user of the host computer to interact with the network-enabled embedded device over the network through the host computer.

22. The method of claim 21, wherein the network protocol stack is implemented as a central program loop and a plurality of processes which are sequentially and preemptively invoked from the central program loop.

23. The method of claim 21, wherein:
the network-enabled embedded device comprises a plurality of device objects; and
the shadow program comprises a plurality of shadow objects, each of the plurality of shadow objects emulating one of the plurality of device objects.

24. The method of claim 21, wherein the shadow program further comprises an object storing data identifying the network-enabled embedded device.

25. The method of claim 24, wherein the data identifying the network-enabled embedded device comprise a network address of the network-enabled embedded device.

26. The method of claim 25, wherein the network address comprises an IP number.

27. The method of claim 23, wherein:
the plurality of device objects comprise an input device object for receiving an input from the user; and
the plurality of shadow objects comprise a an input shadow object emulating the input device object, the input shadow object receiving the input from the user and passing the input to the input device object.

28. The method of claim 23, wherein:
the plurality of device objects comprise an output device object for providing an output to the user; and
the plurality of shadow objects comprise a an output shadow object emulating the output device object, the output shadow object receiving the output from the output device object and passing the output to the user.

29. The method of claim 21, wherein step (b) comprises invoking the shadow program from a Web browser running on the host computer.

30. The method of claim 21, wherein:
the user of the host computer is a software component running on the host computer; and
the software component running on the host computer interacts with the network-enabled embedded device over the network through the shadow program.

31. The method of claim 21, wherein, during step (b):
the network-enabled embedded device is connected over the network only to the shadow program; and
the shadow program is connected over the network only to the network-enabled embedded device.

32. The method of claim 31, wherein:
the network-enabled embedded device is one of a plurality of network-enabled embedded devices;
the shadow program is one of a plurality of shadow programs, each corresponding to one of the plurality of network-enabled embedded devices; and
step (b) comprises running a delegate program on the host computer, the delegate program implementing the plurality of shadow programs.

33. The method of claim 32, wherein the delegate program is a software component.

34. The method of claim 21, wherein step (b) comprises dynamically building the shadow program in accordance with a meta description of the network-enabled embedded device.

35. The method of claim 34, wherein the shadow program is dynamically built by:
(i) instantiating a device shadow pseudo-object;
(ii) creating a shadow object adapter and dispatcher to allow communication between the device shadow pseudo-object and the network-enabled embedded device;
(iii) communicating between the device shadow pseudo-object and the network-enabled embedded device to retrieve the meta description; and
(iv) building the shadow object from the device shadow pseudo-object in accordance with the meta description.

36. The method of claim 35, wherein the network-enabled embedded device is assigned a network address known to the device shadow pseudo-object to permit the device shadow pseudo-object to communicate with the network-enabled embedded device.

37. The method of claim 36, wherein the device shadow pseudo-object initiates communication with the network-enabled embedded device through a static method call.

38. The method of claim 35, wherein the network-enabled embedded device stores the meta description.

39. The method of claim 35, wherein the network-enabled embedded device stores a pointer to the meta description.

40. The method of claim 35, wherein the shadow object is built from the device shadow pseudo-object by:
(A) building a device shadow object from the device shadow pseudo-object in accordance with the meta description;
(B) instantiating a plurality of object shadow pseudo-objects, each corresponding to an object in the network-enabled embedded device; and
(C) building object shadow objects from the object shadow pseudo-objects in accordance with the meta description.
